# EUROPÄISCHE PATENTANMELDUNG

(11) **EP 4 414 685 A2**
(43) Veröffentlichungstag der Anmeldung: **14.08.2024**
(21) Anmeldenummer: 24152963.5
(22) Anmeldetag: 19.01.2024
(51) Int. Cl.: G01N 15/06, G01N 35/00

(54) **VERFAHREN UND DETEKTIONSBEREICH ZUR AUFZEICHNUNG VON MIKROPARTIKELN UND SCHEIBENFÖRMIGER PROBENTRÄGER**

(30) Priorität: 20.01.2023 DE 102023101480
(71) Anmelder: Testo bioAnalytics GmbH, 79822 Titisee-Neustadt (DE)
(72) Erfinder: Münzer, Markus, 79856 Hinterzarten (DE); Riemer, Joel, 79874 Breitnau (DE)
(74) Vertreter: Mertzlufft-Paufler, Cornelius

(57) **Zusammenfassung**

Die Erfindung schlägt somit allgemein ein Verfahren in einem Detektionsbereich (2) zur Aufzeichnung von Mikropartikeln (1) vor, wobei die Mikropartikel (1) auf einer Membran (3) gesammelt und durch eine Abfolge (4) von Aufnahmen (5) entlang der Membran (3) aufgezeichnet werden, wobei wenigstens ein Referenzmarker (6) pro Aufnahme (5) aufgezeichnet wird (Figur 1) .

## Beschreibung

Die Erfindung betrifft ein Verfahren zur Aufzeichnung von Mikropartikeln in einem Detektionsbereich mit einer Membran, wobei die Mikropartikel auf der Membran gesammelt und durch wenigstens eine Aufnahme der Membran aufgezeichnet werden. Bevorzugt ist vorgesehen, dass die gesammelten Mikropartikel durch eine Abfolge von Aufnahmen entlang der Membran aufgezeichnet werden.

Die Erfindung betrifft außerdem einen Detektionsbereich zur Aufzeichnung von Mikropartikeln, insbesondere zur Durchführung eines erfindungsgemäßen Verfahrens, aufweisend einen Aufnahmeraum mit einer Membran und wenigstens einen Referenzmarker.

Es ist bekannt, dass zu untersuchende Mikropartikel auf Membranen gesammelt werden können, um anschließend aufgezeichnet zu werden. Häufig werden große Membranen verwendet, um Verstopfungen der Membran durch aufgesammelte Mikropartikel zu verhindern. Allerdings muss die große Membran vollständig abgescannt werden, da die Mikropartikel im Verhältnis zur Membran relativ klein sind und somit irgendwo auf der Membran zum Liegen kommen können. Somit ist eine Laufzeit einer vollständigen Scannung der großen Membran verhältnismäßig zeitintensiv. Erschwerend kommt hinzu, dass große Membranen zu Unebenheiten neigen, welche für eine vollständige Informationssammlung durch eine Abfolge von Scans in Z-Richtung ("Z-Stacking") kompensiert werden müssen. Dadurch wird die Laufzeit einer Detektion von Mikropartikeln noch länger. Ferner ist eine Orientierung auf großen Membranen nicht ohne Weiteres möglich, da großen Membranen insbesondere in der Mitte Referenzmarker fehlen, wodurch eine optimale Lokalangabe erschwert wird. Insbesondere bei Störungen kann eine fehlende Orientierung zu langen Laufzeiten und/oder zu Informationsverlust führen.

Ferner betrifft die Erfindung einen scheibenförmigen Probenträger, welcher insbesondere mit einer Mikrofluidik versehen ist.

Es ist daher Aufgabe der Erfindung, die Detektion von Mikropartikeln auf Membranen zu verbessern.

Zur Lösung der genannten Aufgabe sind erfindungsgemäß die Merkmale des Anspruchs 1 vorgesehen. Insbesondere wird somit zur Lösung der genannten Aufgabe bei einem Verfahren der eingangs beschriebenen Art erfindungsgemäß vorgeschlagen, dass wenigstens ein Referenzmarker pro Aufnahme aufgezeichnet wird. Somit ist eine Orientierung auf der Membran immer möglich, wodurch die Laufzeit einer Messung gering gehalten werden kann. Ferner können auch Doppelmessungen vermieden werden, was eine Messgenauigkeit erhöht. Somit kann eine Detektion von Mikropartikeln auf Membranen verbessert werden.

Es kann vorgesehen sein, dass bei der Aufnahme des wenigstens einen Referenzmarkers wenigstens zwei unterschiedliche Positionen des Referenzmarkers aufgezeichnet werden, insbesondere wobei die zwei unterschiedlichen Positionen sich auf gegenüberliegenden Seiten der Aufnahme befinden. Hierdurch kann eine Orientierung auf der Membran besonders sicher realisiert sein.

Ferner kann nach einer Störung eine Detektion der Mikropartikel fortgeführt werden, da durch ein erfindungsgemäßes Verfahren, insbesondere durch die bereits mit den durchgeführten Aufnahmen aufgezeichneten Referenzmarker, bekannt sein kann, welcher Bereich der Membran bis zum Zeitpunkt der Störung aufgenommen wurde. Somit können auch nach einer Störung Messungen abgeschlossen werden, wodurch keine kostbaren Proben bzw. Informationen verloren gehen.

Eine (nicht abschließende) Liste von Mikropartikeln kann beispielsweise umfassen: lebende oder organische Materie, insbesondere Mikroorganismen wie Bakterien, Pilze und Protozoen, und Viren sowie Teile davon, und tote oder anorganische Materie, beispielsweise Staub- und/oder Rußpartikel.

Dabei ist bei einem erfindungsgemäßen Verfahren vorzugsweise vorgesehen, dass eine Vielzahl an Aufnahmen entlang der Membran genommen werden, die seitlich gegeneinander versetzt sind. Dabei kann eine Aufnahme ein einzelnes Bild sein. Es kann auch vorgesehen sein, dass pro Aufnahmesegment der Membran mehrere Bilder zu einer Aufnahme übereinandergelegt werden. Somit ist ein Verfahren sehr flexibel einsetzbar und weniger störanfällig.

Eine Membran kann so ausgestaltet sein, dass bei einem erfindungsgemäßen Verfahren eine Vielzahl an verschiedenen Mikropartikeln aufgenommen und gesammelt werden können. Zu untersuchende Mikropartikel können anorganisch und/oder organisch sein, wobei organische Mikropartikel vorzugsweise mikrobiellen Ursprungs sein können. Somit kann ein erfindungsgemäßes Verfahren in einer Vielzahl von Industriezweigen, beispielsweise in der Pharmazie und der Lebensmittelindustrie, zum Einsatz kommen.

Die Referenzmarker können verschiedenartig ausgebildet sein, sodass eine optische Unterscheidung bereits anhand der Ausbildung der Referenzmarker möglich ist. Verschiedenartig kann vorzugsweise eine Art, eine Form und/oder Farbe der Referenzmarker sein. Generell können Referenzmarker optimal bei einem erfindungsgemäßen Verfahren angepasst sein, wodurch das erfindungsgemäße Verfahren noch weiter verbessert werden kann.

Bei einer vorteilhaften Ausgestaltung kann vorgesehen sein, dass wenigstens zwei Referenzmarker pro Aufnahme aufgezeichnet werden. Somit kann eine Orientierung noch weiter verbessert werden, da die Verwendung von wenigstens zwei Referenzmarkern vorteilhaft mehr Informationen wiedergibt.

Insbesondere ist dabei vorgesehen, dass sich die beiden Referenzmarker auf gegenüberliegenden Seiten der Aufnahme befinden. Vorteilhaft darin kann sein, dass ein Referenzmarker für zwei Aufnahmesegmente verwendet werden kann. So kann beispielsweise ein Referenzmarker, der bei einer Aufnahme auf einer "unteren" Position detektierbar ist, als "oberer" Referenzmarker einer weiteren Aufnahme dienen, wenn bei einem Verfahren Membranabschnitte unterhalb (in Y-Richtung) der ersten Aufnahme aufgezeichnet werden.

Bei einer vorteilhaften Ausgestaltung kann vorgesehen sein, dass zwischen zwei Aufnahmen immer wenigstens ein Referenzmarker detektierbar ist. Hierdurch kann ein Referenzmarker als Orientierungselement genutzt werden, um sich sicher von einem Aufnahmesegment zu einem nächsten Aufnahmesegment zu gelangen, was vorteilhaft ist. Somit kann auch im Fall einer Störung zwischen zwei Aufnahmen die Orientierung auf der zu untersuchenden Membran aufrechterhalten werden.

Insbesondere können wenigstens zwei Referenzmarker detektierbar sein, was eine Orientierung zwischen zwei Aufnahmen noch vorteilhafter ermöglicht.

Bei einer vorteilhaften Ausgestaltung kann vorgesehen sein, dass wenigstens zwei unterschiedliche Abbildungsentfernungen pro Aufnahmesegment auf der Membran aufgezeichnet und zu einer Aufnahme generiert werden. Hierdurch kann vorzugsweise durch "Z-Stacking" eine Bildfolge detektiert werden, die vorteilhaft eine Aufnahme mit einer großen Schärfentiefe generiert. Ferner können somit etwaige Unebenheiten einer Membran ausgeglichen werden, wodurch eine Aufzeichnung von Mikropartikeln besonders verbessert wird.

Bei einer vorteilhaften Ausgestaltung kann vorgesehen sein, dass auf der Membranoberfläche Referenzmarker aufgebracht sind, anhand derer die Membranoberfläche in Z-Richtung identifiziert werden kann. Diese Referenzmarker können in Form von Referenzpartikeln, Referenzstrukturen oder einer Referenzfärbung der Membran ausgestaltet sein, welche vor oder während des Verfahrens auf die Membran aufgebracht werden.

Besonders vorteilhaft ist eine Ausgestaltung, die eine optische Unterscheidung anhand eines gegenüber eines Zielanalyten anderen Farbspektrums aufweist. Hierdurch können die Aufnahmen und damit die Zeitdauer des "Z-Stackings" reduziert werden und der Prozess zielgerichteter mit einer höheren Präzision durchgeführt werden. Zusätzlich können insbesondere Referenzpartikel auch als Kontrolle bzw. Positivkontrolle bzgl. der korrekten Funktion des Probenträgers verwendet werden.

Bei einer vorteilhaften Ausgestaltung kann vorgesehen sein, dass die Aufzeichnung wenigstens eine Fluoreszenzaufnahme beinhaltet. Somit kann die Membran vorteilhaft nach fluoreszierenden Mikropartikeln gescreent werden. Dies ist insbesondere dann vorteilhaft, wenn eine Umweltprobe vor der Aufzeichnung mit fluoreszenzsmarkern vorbehandelt wurde, um spezifische Mikropartikel zu detektieren.

Insbesondere kann dabei vorgesehen sein, dass bei jeder Aufnahme wenigstens eine Fluoreszenzaufnahme aufgezeichnet wird. Hierdurch wird vorteilhaft jedes Aufnahmesegment mit Fluoreszenzsaufnahmen gescannt, wodurch vorteilhat eine umfassende Unterscheidung zwischen fluoreszierenden und nicht fluoreszierenden Mikropartikeln in einer Umweltprobe vorgenommen werden kann.

Bei einer vorteilhaften Ausgestaltung kann vorgesehen sein, dass das Verfahren in einem fluidischen Kanalsystem durchgeführt wird. Hierdurch kann ein Verfahren mit einem geringen Volumen durchgeführt werden, was kostengünstig und somit vorteilhaft ist.

Dabei kann vorgesehen sein, dass das fluidische Kanalsystem als Teil einer Mikrofluidik ausgebildet ist. Hierdurch kann eine Mikroumgebung der Mikrofluidik steuerbar ausgestaltet sein, wodurch vielfältige Verarbeitung- und/oder Detektionsprozesse des Verfahrens schnell und kostengünstig durchgeführt werden können.

Bei einer vorteilhaften Ausgestaltung kann vorgesehen sein, dass zur Aufzeichnung von Mikropartikeln in einem Detektionsbereich mit einer Membran, wobei die Mikropartikel auf der Membran gesammelt und durch wenigstens eine Aufnahme entlang der Membran aufgezeichnet werden, vor der Aufnahme wenigstens ein Verarbeitungsschritt ausgeführt wird. Somit kann bei einem Verfahren die Probe, insbesondere die Mikropartikel, so verarbeitet werden, dass eine bestimmte Detektionsmethode ermöglicht bzw. verbessert wird. So können Mikropartikel beispielsweise mit fluoreszenzmarkierten Sonden behandelt werden, die nur spezifische Mikropartikel erkennen können. Somit können beispielsweise bestimmte Mikropartikel durch Fluoreszenzmessungen aus einer Umweltprobe detektiert werden. Dies ist insbesondere vorteilhaft für Industriezweige, wie Pharmazie und Lebensmittelindustrie, die spezifische Nachweiseverfahren für Mikropartikel, vorzugsweise Mikroorganismen, verwenden.

Der Verarbeitungsschritt kann dabei vorzugsweise direkt auf der Membran stattfinden, wodurch das gesamte, gesammelte Material verlustfrei verarbeitet werden kann. Ferner ist daran vorteilhaft, dass kein zusätzlicher Reaktionsraum für den Verarbeitungsprozess zur Verfügung gestellt werden muss. Eine Umlagerung der gesammelten Mikropartikel in einen weiteren Reaktionsraum würde auch Zeitbeanspruchen, die bei einem Verarbeitungsschritt auf der Membran vorteilhaft eingespart würde.

Dabei kann das Verfahren die bisher beschriebenen oder nachfolgend beanspruchten vorteilhaften Verfahrensmerkmale aufweisen und/oder vorteilhaften Vorrichtungsmerkmale haben, wodurch ein Verfahren sehr kundenspezifisch angepasst werden kann.

Insbesondere kann dabei vorgesehen sein, dass mehr als ein Verarbeitungsschritt auf der Membran ausgeführt wird. Somit können komplexe Verfahren durchgeführt werden und/oder Modifikationen, die Aufzeichnungen von Mikropartikeln noch genauer ermöglichen.

Ein Verfahren kann auch durch eine Aufnahme der Membran zur Detektion von Mikropartikeln ausgebildet sein. Somit können Mikropartikel auf der Membran vorzugsweise durch Abfilmen aufgezeichnet werden. Hierdurch kann ein Verfahren besonders schnell ausgeführt werden, wodurch Nachweisergebnisse besonders schnell verfügbar sind.

Bei einer vorteilhaften Ausgestaltung kann vorgesehen sein, dass der wenigstens eine Verarbeitungsschritt eine Fixierung und/oder Konditionierung und/oder Färbung der Mikropartikel und/oder eine Hintergrundreduktion und/oder eine thermische und/oder optische Anregung umfasst. Somit kann ein Verfahren stark an die nachzuweisenden Mikropartikel angepasst werden.

Derartige Verarbeitungsschritte können einzeln oder in Kombination mit weiteren Verarbeitungsschritten die Sensitivität und/oder Spezifität des Verfahrens erhöhen, was ein Verfahren noch weiter verbessert.

Bei einer vorteilhaften Ausgestaltung kann vorgesehen sein, dass die gesammelten Mikropartikel in einem kleinen Volumen in eine mit dem Detektionsbereich verbundenen Kammer gespült und mit wenigstens einer in der Kammer vorgehaltenen Substanz behandelt werden und dass die Mikropartikel zur Aufnahme in den Detektionsbereich zurückgespült werden. Hierdurch kann ein Verfahrensschritt in einer mit dem Detektionsbereich verbunden Kammer ausgeführt werden. Dies ist insbesondere dann vorteilhaft, wenn beispielsweise eine labile Substanz gesondert in einer Kammer vorgehalten werden muss, sodass die Substanz nicht durch andere Prozesse unwirksam wird, bevor die mit der Substanz behandelten Mikropartikel aufgezeichnet werden. Eine Substanz zur Behandlung der Mikropartikel kann eine fluoreszenzmarkierte Nukleinsäuresonde sein.

Bei einer vorteilhaften Ausgestaltung kann vorgesehen sein, dass zur Fokussierung einer Aufnahmeeinheit ein Referenzelement verwendet wird. Bevorzugt handelt es sich bei der Aufnahmeeinheit um eine Kamera. Es kann sich auch um ein anderes optisches Gerät handeln.

Das Referenzelement kann so angeordnet sein, dass dieses dieselbe Entfernung zur Aufnahmeeinheit wie die Membran aufweist. Auf diese Weise können die Einstellungen der Aufnahmeeinheit, beispielsweise die Objektiveinstellungen, an die Entfernung zur Membran angepasst werden. So können die Mikropartikel optimal aufgezeichnet werden.

Bei dem Referenzelement kann es sich um einen Teil der Membran handeln. Dies bietet den Vorteil, dass die Aufnahmeeinheit exakt auf die Entfernung zur Membran eingestellt bzw. fokussiert werden kann. Alternativ oder zusätzlich kann es sich bei dem Referenzelement auch um ein separates Bauteil handeln. Das Bauteil kann dabei so ausgeführt sein, dass dieses besonders kontrastreich und für die Aufnahmeeinheit besonders leicht zu erkennen ist, sodass die Fokussierung verbessert werden kann.

Vorzugsweise ist das Referenzelement außerhalb des Detektionsbereichs angeordnet. Damit kann das Referenzelement frei von Verschmutzungen und/oder Verunreinigungen gehalten werden, sodass die Fokussierung nicht durch Störfaktoren behindert und/oder verschlechtert wird.

Alternativ oder zusätzlich sind zur Lösung der genannten Aufgabe erfindungsgemäß die Merkmale des nebengeordneten, auf einen Detektionsbereich gerichteten Anspruchs vorgesehen. Insbesondere wird somit zur Lösung der genannten Aufgabe bei einem Detektionsbereich der eingangs beschriebenen Art erfindungsgemäß vorgeschlagen, dass die Membran im Aufnahmeraum vorgespannt ist. Ein Vorspannen kann die Welligkeit einer Membran reduzieren, wodurch vorteilhaft weniger Messungen in Z-Richtung ("Z-Stacking") durchgeführt werden müssen. Dies führt zu schnelleren Messungen, wodurch mehrere Proben pro Zeit aufgezeichnet und ausgewertet werden können, was vorteilhaft ist.

Ferner ist vorteilhaft, dass durch ein reduziertes "Z-Stacking" der Antrieb einer Kamera weniger belastet werden muss und somit langlebiger ist. Somit kann die Aufzeichnung von Mikropartikeln verbessert werden.

Insbesondere ist ein Detektionsbereich dazu ausgebildet, ein wie zuvor beschriebenes oder nachfolgend beanspruchtes Verfahren durchführen zu können. Ein solcher Detektionsbereich ist besonders vorteilhaft, da dadurch die vorteilhaften Verfahren durchgeführt werden können, was die Aufzeichnung von Mikropartikeln noch weiter verbessert.

Der Detektionsbereich ist vorzugsweise so ausgebildet, dass der wenigstens eine Referenzmarker bei der Aufzeichnung von Mikropartikeln auf der Membran bei jeder Aufnahme sichtbar ist.

Es können alternativ oder zusätzlich auch mehrere Referenzmarker im Detektionsbereich ausgebildet sein, sodass wenigstens immer der eine und/oder ein Referenzmarker bei der Aufzeichnung von Mikropartikeln auf der Membran bei der Aufnahme sichtbar ist/sind.

Bei einer vorteilhaften Ausgestaltung kann vorgesehen sein, dass die Membran durch einen Spannring oder ein Spannmittel vorgespannt ist, wobei der Spannring oder das Spannmittel vorzugsweise in eine Aufnahme eingearbeitet ist. Durch einen Spannring oder einem Fachmann bekannten, sonstigen Spannmittel kann die Membran vorteilhaft mit gängigen Werkzeugen bzw. Verfahren vorgespannt werden, wodurch ein Anbringen der Membran in eine Aufnahme, insbesondere in eine Aufnahme des Detektionsbereichs, kostengünstig und schnell ausführbar sein kann.

Ein Vorspannen kann alternativ oder zusätzlich auch durch eine thermische Vorbehandlung der Membran mit anschließendem Abkühlen durchgeführt werden. Somit können Unebenheiten der Membran besonders stark reduziert werden.

Alternativ oder zusätzlich kann vorgesehen sein, dass der Spannring oder das Spannmittel abdichtend ist. Dies ist insbesondere dann von Vorteil, wenn durch den Detektionsbereich, beispielsweise in einem fluidischen Kanalsystem einer vorzugsweisen Mikrofluidik, ein Flüssigkeitsstrom fließt. Durch einen abdichten Spannring (oder Spannmittel) kann somit vermieden werden, dass in dem Flüssigkeitsstrom befindliche Mikropartikel verloren gehen und somit eine Aufzeichnung verfälscht werden würde.

Bei einer vorteilhaften Ausgestaltung kann vorgesehen sein, dass ein Material des Aufnahmeraums zumindest teilweise die Membran durchdringt. Somit kann das durchdringende Material die Membran an den Aufnahmeraum befestigen bzw. vorspannen. Zusätzlich kann das Durchdringen des Materials auch das zuvor erwähnte Abdichten durch den Spannring oder durch das Spannmittel verstärken, was vorteilhaft ist.

Bei einer vorteilhaften Ausgestaltung kann vorgesehen sein, dass der Aufnahmeraum und die Membran unterschiedliche optische Eigenschaften aufweisen. Es kann beispielsweise vorgesehen sein, dass die Membran weiß und der Aufnahmeraum schwarz ausgebildet sind. Vorteilhaft daran kann sein, dass bereits mit bloßem Auge erkennbar ist, dass ein Material des Aufnahmeraums, wie zuvor bereits erläutert, die Membran durchdringt. Hierdurch kann vorteilhaft bereits mit bloßem Auge erkannt werden, ob die Befestigung der Membran an dem Aufnahmeraum und damit eine etwaige Vorspannung der Membran und/oder Abdichtung des Detektionsraums vollumfassend stattgefunden hat.

Bei einer vorteilhaften Ausgestaltung kann vorgesehen sein, dass die Membran einen Ablauf hat. Somit kann eine Flüssigkeit den Detektionsbereich verlassen, wodurch zusätzliches Störmaterial der Flüssigkeit eine Aufzeichnung weniger bis gar nicht beeinflussen würde. Somit können Aufzeichnungen einfacher und schneller auswertbar sein, insbesondere dann, wenn die Mikropartikel durch eine Flüssigkeit zu der Membran überführt werden.

Insbesondere kann dabei vorgesehen sein, dass der Ablauf eine Ablaufrinne umfasst. Hierdurch kann vorteilhaft ein gezielter und platzsparender Ablauf realisiert werden.

Bei einer vorteilhaften Ausgestaltung kann vorgesehen sein, dass der Ablauf der Membran entlüftet ist. So kann ein möglicher Rückstau von Flüssigkeit vermieden werden und die Membran kann vollständig trocknen.

Bei einer vorteilhaften Ausgestaltung kann vorgesehen sein, dass die Membran länglich ausgebildet ist. Somit kann der Sichtbereich einer Kamera eine obere und eine untere Grenze einer Membran gleichzeitig erfassen. Vorteilhaft daran ist, dass eine Aufzeichnungsfolge der gesamten Membran dann hauptsächlich nur in X-Richtung (oder nur in Y-Richtung) notwendig ist, wodurch ein Achsensystem der Kamera langlebiger ausgebildet sein kann.

Bei einer vorteilhaften Ausgestaltung kann vorgesehen sein, dass der Aufnahmeraum einen Zulauf und einen Ablauf aufweist. Dies ist insbesondere dann vorteilhaft, wenn die Mikropartikel in einem Flüssigkeitsstrom zur Membran hin überführt werden. So kann ein Flüssigkeitsstrom über den Zulauf in den Aufnahmeraum gelangen und zu der Membran hin überführt werden. Der Ablauf dient zur Entfernung überschüssiger Flüssigkeit und kann mit dem Ablauf der Membran, wie zuvor bereits beschrieben, in Wirkungsverbindung stehen. Ein Zulauf kann auch zusätzlich dazu ausgebildet sein, dass die auf der Membran gesammelten Mikropartikel in einem kleinen Volumen in eine mit dem Detektionsbereich verbundenen Kammer gespült und/oder zurückgespült werden, um nach wenigstens einem Verarbeitungsschritt aufgezeichnet werden zu können.

Vorzugsweise ist die Membran zwischen Zulauf und Ablauf positioniert. Bevorzugt ist dabei die Membran unterhalb des Zulaufs und oberhalb des Ablaufs positioniert, wodurch vorteilhaft Flüssigkeit in den Ablauf tropfen und aus dem Detektionsbereich entweichen kann. Insgesamt kann also ein Aufnahmeraum besonders variabel durch einen Zulauf und oder Ablauf ausgestaltet sein, wobei unterschiedlichste Verfahren, wie zuvor beschrieben und/oder nachfolgend beansprucht, durchgeführt werden können.

Bei einer vorteilhaften Ausgestaltung kann vorgesehen sein, dass der wenigstens eine Referenzmarker an der Membran ausgebildet ist. Somit ist der wenigstens eine Referenzmarker vorteilhaft an der Membran ausgebildet, wodurch der Sichtbereich einer Kamera nicht weit über ein Aufnahmesegment der Membran hinaus geht. Somit kann ein Großteil einer Aufnahme die Membran abbilden, wodurch die gesamte Membran schnell aufgenommen und analysiert werden kann.

Insbesondere ist der wenigstens eine Referenzmarker durch die Membran ausgebildet. Somit kann eine Aufnahme vorteilhaft einen noch größeren Teil der Membran abbilden, wodurch die gesamte Membran noch schneller aufgenommen und analysiert werden kann.

Ganz besonders ist der wenigstens eine Referenzmarker durch den Rand der Membran ausgebildet. Somit kann eine Aufnahme vorteilhaft ausschließlich Membran abbilden, wodurch die gesamte Membran besonders schnell aufgenommen und analysiert werden kann, insbesondere wenn die Membran, wie zuvor beschrieben, länglich ausgebildet ist.

Bei einer vorteilhaften Ausgestaltung kann vorgesehen sein, dass der wenigstens eine oder wenigstens zwei Referenzmarker so an der Membran oder zur Membran hin ausgerichtet ist/sind, dass bei jeder Aufnahme wenigstens zwei Positionen des wenigstens einen Referenzmarkers oder wenigstens zwei Referenzmarker aufnehmbar sind. Hierdurch kann vorteilhaft ein Verfahren durchgeführt werden, bei dem pro Aufnahme wenigstens zwei vorzugsweise gegenüberliegende Positionen des oder der Referenzmarker detektierbar sind.

Bei einer vorteilhaften Ausgestaltung kann vorgesehen sein, dass jeder Referenzmarker oder jedes Aufnahmesegment eine eigene Kennzeichnung hat. Durch eine spezifische Kennzeichnung kann eine Position noch genauer bestimmt werden, was insbesondere bei Störungen oder Re-analysen vorteilhaft sein kann, wenn die derzeitige oder eine vom Benutzer bestimmte Position erneut analysiert werden soll.

Bei einer vorteilhaften Ausgestaltung kann vorgesehen sein, dass sich der Detektionsbereich in einem fluidischen Kanalsystem befindet. Somit können kleine Probenvolumina einer Umweltprobe analysiert werden.

Vorzugsweise befindet sich der Detektionsbereich in einer Mikrofluidik eines scheibenförmiger Probenträgers. Somit kann ein kleines Volumen zur Aufzeichnung von Mikropartikeln in einem Verfahren, insbesondere wie zuvor beschrieben oder nachfolgend beansprucht, schnell und automatisiert durchgeführt werden. Ferner kann ein scheibenförmiger Probenträger zur Zentrifugation ausgebildet sein. Hierdurch kann eine Aufzeichnung von Mikropartikeln besonders vorteilhaft durch zentrifugale Mikrofluidik automatisiert werden, was sehr vorteilhaft ist.

Insbesondere kann vorgesehen sein, dass der Detektionsbereich mit wenigstens einer Kammer verbunden ist. Somit können vorteilhaft die auf der Membran gesammelten Mikropartikel in einem kleinen Volumen in die Kammer gespült und mit wenigstens einer in der Kammer vorgehaltenen Substanz behandelt werden und zur Aufnahme in den Detektionsbereich zurückgespült werden.

Bei einer vorteilhaften Ausgestaltung kann vorgesehen sein, dass die Kammer, insbesondere eine Kavität der Kammer wenigstens eine Substanz, vorzugsweise eine Nukleinsäuresonde, umfasst. Somit können vorzugsweise Mikroorganismen mit Nukleinsäuresonden zum spezifischen Nachweis verarbeitet werden. Hierdurch können vorteilhaft Mikroorganismen in einer Umweltprobe detektiert werden.

Bei einer vorteilhaften Ausgestaltung kann vorgesehen sein, dass das fluidische Kanalsystem eine Folie aufweist, die vorzugsweise gegenüber der Membran positioniert ist und dass die Folie entfernbar ist. Eine Folie kann somit das fluidische Kanalsystem abdichten, wodurch andere Bauteile, insbesondere die Kamera, vor austretender Flüssigkeit geschützt werden können.

Eine entfernbare Folie kann vorzugsweise nach erfolgtem Flüssigkeitstransfer in den Detektionsbereich entfernt werden. Durch das Entfernen der Folie kann eine Kamera auch schwache Signale der zu untersuchenden Mikropartikel aufzeichnen, die durch eine zwischen Kamera und Membran fixierten Folie nicht detektierbar wären. Somit kann vorteilhaft die Sensitivität eines Detektionsbereichs verbessert werden.

Alternativ oder zusätzlich sind zur Lösung der genannten Aufgabe erfindungsgemäß die Merkmale des nebengeordneten, auf einen scheibenförmigen Probenträger gerichteten Anspruchs vorgesehen. Insbesondere wird somit zur Lösung der genannten Aufgabe bei scheibenförmigen Probenträgern der eingangs beschriebenen Art erfindungsgemäß vorgeschlagen, dass bei dem scheibenförmigen Probenträger Mittel zur Ausführung eines wie zuvor beschriebenen oder nachfolgend beanspruchten Verfahrens und/oder eines wie zuvor beschriebenen und/oder nachfolgend beanspruchten Detektionsbereich ausgebildet sind. Ein scheibenförmiger Probenträger kann vorzugsweise zur Verwendung in einer Zentrifuge ausgebildet sein. Somit kann ein Verfahren und/oder ein Detektionsbereich zur Aufzeichnung von Mikropartikeln vollautomatisiert durch zentrifugale Mikrofluidik ausgeführt bzw. verwendet werden, was kostensparend und schnell sein kann. Dies kann auch außerhalb von arbeitsintensiven Analyselabors stattfinden, was von Vorteil ist.

Bei einer vorteilhaften Ausgestaltung kann vorgesehen sein, dass ein Referenzelement vorzugsweise außerhalb des Detektionsbereichs angeordnet ist. Das Referenzelement kann zur Fokussierung einer Aufnahmeeinheit, beispielsweise einer Kamera, genutzt werden.

Bei dem Referenzelement kann es sich beispielsweise um einen Teil der Membran handeln, der außerhalb des Detektionsbereichs angeordnet ist. Auf diese Weise kommt dieser Teil der Membran nicht mit den Reaktionsbestandteilen des Nachweisverfahrens in Kontakt. Dadurch kann die Position der Membran bei einer Fokussuche der Kamera genauer bestimmt werden, da die Membran außerhalb des Detektionsbereiches insbesondere keinen optischen Veränderungen durch die Reaktionsbestandteile unterliegt und somit reproduzierbarer zu detektieren ist.

Bei dem Referenzelement kann es sich auch um ein separates Bauteil handeln, welches im Bezug zur Kamera mit der Membran auf der gleichen Ebene liegt. Das Referenzelement kann weiter für die Fokussuche der Kamera optimiert ausgestaltet sein, beispielsweise kann das Referenzelement besonders kontrastreich ausgebildet sein. So kann die Fokussuche der Kamera besonders einfach sein.

Alternativ oder zusätzlich sind zur Lösung der genannten Aufgabe erfindungsgemäß die Merkmale des nebengeordneten, auf die Verwendung eines Referenzelements eines scheibenförmigen Probenträgers gerichteten Anspruchs vorgesehen. Insbesondere wird somit erfindungsgemäß vorgeschlagen, dass das Referenzelement zu einer Fokussierung für eine Aufnahme einer Membran verwendet wird. Bei dem Referenzelement kann es sich, wie oben beschrieben, um einen Teil der Membran oder um ein separates Bauteil handeln, wodurch die entsprechenden, oben beschriebenen Vorteile erreicht werden können.

Das Referenzelement ist vorzugsweise außerhalb eines Detektionsbereichs angeordnet. Dadurch kann das Referenzelement von Verschmutzungen und/oder Verunreinigungen, die beispielsweise von Reaktionsbestandteilen stammen können, freigehalten werden.

Bevorzugt ist der scheibenförmige Probenträger wie oben beschrieben ausgeführt. Dadurch können die bereits beschriebenen Vorteile genutzt werden.

Die Erfindung wird nun anhand von Ausführungsbeispielen näher beschrieben, ist jedoch nicht auf diese Ausführungsbeispiele beschränkt. Weitere Ausführungsbeispiele ergeben sich durch Kombination der Merkmale einzelner oder mehrerer Ansprüche untereinander und/oder mit einzelnen oder mehreren Merkmalen der Ausführungsbeispiele.

Es zeigt:
- Fig. 1: eine Aufsicht auf einen erfindungsgemäßen Detektionsbereich, wobei auf einer Membran gesammelte Mikropartikel aufgezeichnet werden,
- Fig. 2: eine Seitenansicht eines fluidischen Kanalsystems mit einem erfindungsgemäßen Detektionsbereich,
- Fig. 3: einen scheibenförmigen Probenträger mit Mitteln zur Ausführung eines erfindungsgemäßen Verfahrens und einem erfindungsgemäßen Detektionsbereich,
- Fig. 4: eine Seitenansicht eines fluidischen Kanalsystems, bei der von einer Lichtquelle ein Lichtkanal für eine Fokussierung einer Kamera erzeugt wird,
- Fig. 5: eine Seitenansicht eines fluidischen Kanalsystems, bei der eine Membran für eine Fokussierung einer Kamera teilweise außerhalb eines Detektionsbereichs liegt.

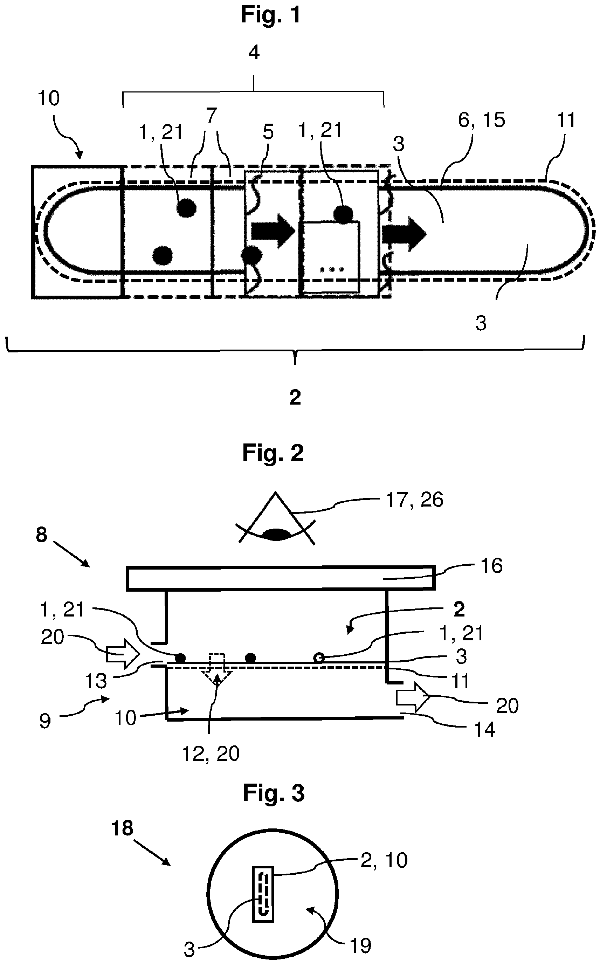

Figur 1 zeigt die Aufsicht auf einen erfindungsgemäßen Detektionsbereich 2, wobei auf einer Membran 3 gesammelte Mikropartikel 1 aufgezeichnet werden.

Die Membran 2 befindet sich in einem nicht näher gezeigten Aufnahmeraum 10. Der Aufnahmeraum 10 kann jedoch beispielsweise wie die in Figur 2 dargestellte Ausführungsform ausgebildet sein.

Die Membran 3 ist durch einen Spannring 11 vorgespannt, sodass die Membran 3 wenig bis gar keine Unebenheiten aufweist. Die Membran 3 wurde zuvor thermisch vorbehandelt und anschließend abgekühlt, wodurch die Membran 3 besonders wenige Unebenheiten hat. Der Spannring 11 bzw. das Material des Aufnahmeraums 10 haben andere optische Eigenschaften (gekennzeichnet durch eine gestrichelte Linie) als die Membran 3 (gekennzeichnet durch eine durchgehende Linie). Optische Eigenschaften können insbesondere Oberflächenstrukturen und/oder Farbgebungen sein. Dadurch kann vorteilhaft bereits mit bloßem Auge erkannt werden, ob die Befestigung der Membran 3 an dem Aufnahmeraum 10 und damit eine etwaige Vorspannung der Membran 3 und/oder Abdichtung des Detektionsraums 2 vollumfassend stattgefunden hat, so wie es in der in Figur 1 dargestellten Ausführungsform der Fall ist.

Die in Figur 1 dargestellte Membran 3 ist länglich ausgebildet, sodass eine Abfolge 4 von Aufnahmen 5 hauptsächlich in X-Richtung (hier von links nach rechts) notwendig ist. Der Sichtbereich einer nicht gezeigten Aufnahmeeinheit 26, welche als Kamera 17 ausgeführt ist, ist als Aufnahmesegment 7 dargestellt.

Bei einem erfindungsgemäßen Verfahren, das wie folgt ablaufen könnte, fährt eine nicht gezeigte Kamera 17 von links nach rechts alle (siehe die zwei schwarzen Pfeile der Figur 1) Aufnahmesegmente 7 ab. Dabei wird für jedes Aufnahmesegment 7 wenigstens eine Aufnahme 5 genommen. Es kann jedoch vorgesehen sein, dass durch "Z-Stacking" eine Bildfolge pro Aufnahmesegment 7 detektiert wird, wodurch vorteilhaft eine Aufnahme 5 mit einer großen Schärfentiefe generiert wird. Somit können etwaige Unebenheiten einer Membran 3 ausgeglichen werden, wodurch eine Aufzeichnung von Mikropartikeln 1 besonders verbessert wird. Bei den in Figur 1 aufgezeichneten Mikropartikeln 1 handelt es sich um Mikroorganismen 21, insbesondere Bakterien.

Das in Figur 1 gezeigte Verfahren detektiert auch Fluoreszenz, sodass in einem Vorbereitungsschritt behandelte Mikropartikel 1, 21 durch Fluoreszenzaufnahmen besonders gut detektierbar und/oder von nicht fluoreszierenden Mikropartikeln 1, 21 zu unterscheiden sind. Dabei wird bei dem in Figur 1 gezeigten Verfahren vor der Aufnahme 5 wenigstens ein Verarbeitungsschritt, hier die Fluoreszenzmarkierung von Mikropartikeln 1, 21 durch Nukleinsäuresonden, ausgeführt (nicht gezeigt).

Das in Figur 1 dargestellte Verfahren zeigt auch, dass der Rand 15 der Membran 3 den einzigen Referenzmarker 6 ausbildet. Dieser Referenzmarker 6 ist in jedem Aufnahmesegment 7 bzw. bei jeder Aufnahme 5 sichtbar. Es ist ebenfalls gezeigt, dass wenigstens zwei Positionen des wenigstens einen Referenzmarkers 6 aufgenommen werden, da wenigstens die gegenüberliegenden Seiten der Membran 3 in X-Richtung detektiert werden. Somit kann selbst im Falle einer Störung, beispielsweise durch ein mechanisches Verrutschen der Membran 3, die Orientierung wieder gefunden werden. Somit können Aufzeichnungen von Mikropartikeln 1, 21 wie Bakterien verbessert werden.

Alternativ können auch zwei Referenzmarker 6 pro Aufnahme 5 aufgezeichnet werden, insbesondere wobei sich die beiden Referenzmarker 6 auf gegenüberliegenden Seiten der Aufnahme 5 befinden. So könnten zwei Referenzmarker 6 außerhalb und/oder innerhalb der Membran 3 jeweils vorzugweise bis zu einer Hälfte des Umfangs der Membran 3 umlaufen (nicht dargestellt).

In dem in Figur 1 gezeigt Verfahren werden ebenfalls zwischen zwei Aufnahmen 5 immer wenigstens zwei Positionen des Referenzmarkers 6, 15 detektiert.

Figur 2 zeigt ein fluidisches Kanalsystem 8, mit einem Aufnahmeraum 10 eines Detektionsbereichs 2, wie er in Figur 1 abgebildet ist. Funktionell und/oder konstruktiv zu dem in Figur 1 ausgeführten Ausführungsbeispiel gleichartige oder identische Bauteile und Funktionseinheiten sind mit denselben Bezugszeichen bezeichnet und nicht noch einmal gesondert beschrieben.

Das fluidische Kanalsystem 8 ist als Teil einer nicht gezeigten Mikrofluidik ausgebildet, wobei der Aufnahmeraum 10 einen Zulauf 13 für einen mit Mikropartikeln 1, 21 versehenen Flüssigkeitsstrom 20 hat. Der Flüssigkeitsstrom 20 kann bei einem wie zuvor beschriebenen Verfahren zur Membran 3 überführt werden. Somit können die Mikropartikel 1, 21 an der Membran 3 gesammelt werden. Der Flüssigkeitsstrom 20 kann über einen Ablauf 12 der Membran 3 und über eine Ablauf 14 des Aufnahmeraums 10 den Detektionsbereich 2 verlassen, sodass störende Bestandteile des Flüssigkeitsstroms 20 vor einer Aufzeichnung entfernt werden können. Der Ablauf 12 kann zudem entlüftet sein, sodass eine Anstauung von Flüssigkeit vermieden werden und die Membran trocknen kann.

Die Membran 3 ist zwischen Zulauf 13 und Ablauf 14 durch den Spannring 11 vorgespannt. Wie zuvor beschrieben, kann wenigstens ein Verarbeitungsschritt auf der Membran 3 durchgeführt werden. Ein oder mehrere Verarbeitungsschritte, beispielsweise eine Fixierung und/oder Konditionierung und/oder Färbung der Mikropartikel 1, 21 und/oder eine Hintergrundreduktion und/oder eine thermische und/oder optische Anregung, können alternativ oder zusätzlich auch in einer nicht näher gezeigten, dem Aufnahmeraum 10 vorgelagerten Kammer 9 durchgeführt werden. Hierzu können die auf der Membran 3 gesammelten Mikropartikel 1, 21 in einem kleinen Volumen in die Kammer 9 gespült und vorbehandelt werden. Nach erfolgter Verarbeitung können die Mikropartikel 1, 21 dann in den Aufnahmeraum 10 zurückgespült und aufgezeichnet werden.

Die Aufzeichnung erfolgt durch eine an das Verfahren angepasste und dem Fachmann bekannte Kamera 17. In Figur 2 ist zwischen Detektionsbereich 2 und Kamera 17 eine Folie 16 positioniert. Diese Folie 16 dichtet den Aufnahmeraum 10 ab, währenddessen der oder ein Flüssigkeitsstrom 20 den Aufnahmeraum 10 durchläuft. Vor einer Aufnahme 5 kann die Folie 16 händisch und/oder automatisiert entfernt werden, sodass die Folie 16 die Aufnahme 5 nicht stört bzw. Aufnahmesignale abschwächt. Somit kann eine Aufzeichnung von Mikropartikeln 1, 21 auch schwache Signale vorteilhaft detektieren.

Figur 3 zeigt einen scheibenförmigen Probenträger 18 mit einer wie zuvor genannten Mikrofluidik, aufweisend ein fluidisches Kanalsystem 8 gemäß Figur 2 mit einem gemäß Figur 1 beschriebenen Detektionsbereich 2, 10. Ferner kann der scheibenförmige Probenträger 18 weitere Mittel 19 zur Ausführung eines wie zuvor beschriebenen oder nachfolgend beanspruchten Verfahrens und/oder einen wie zuvor beschriebenen oder nachfolgend beanspruchten Detektionsbereich 2 ausbilden. Der scheibenförmige Probenträger 18 der Figur 3 ist zur Zentrifugation geeignet, wodurch eine Aufzeichnung von Mikropartikeln 1, 21 besonders vorteilhaft durch zentrifugale Mikrofluidik automatisiert ausführbar sein kann.

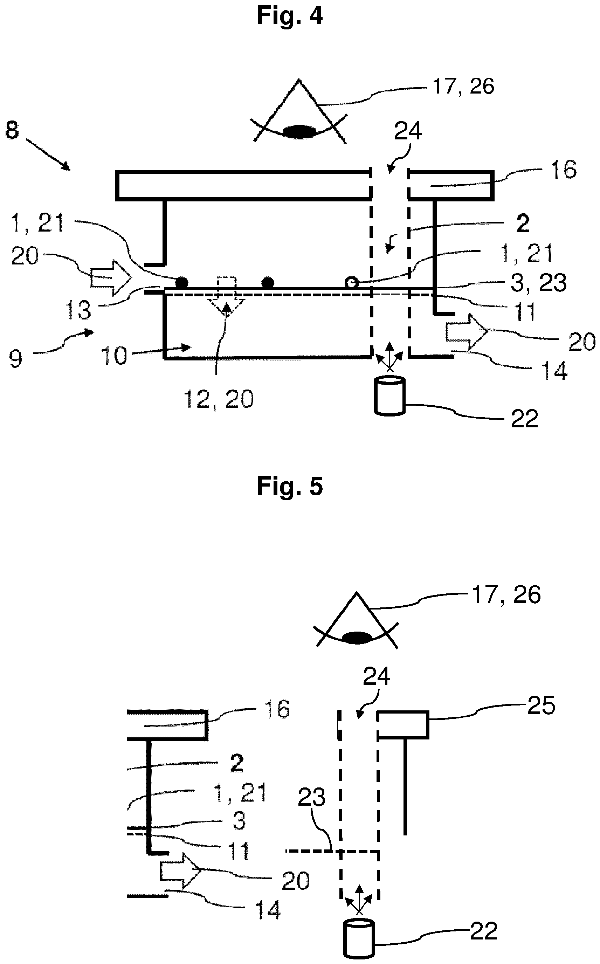

Figur 4 zeigt ein fluidisches Kanalsystem 8, wie es in Figur 2 gezeigt ist, wobei eine Lichtquelle 22 zu sehen ist, welche einen Lichtkanal 24 erzeugt. Der Lichtkanal 24 wird für die Fokussierung der Aufnahmeeinheit 26, welche als Kamera 17 ausgeführt ist, genutzt. Der Lichtkanal 24 durchscheint einen Teil der Membran 3, welcher als Referenzelement 23 für die Fokussierung genutzt wird.

Bei der Fokussierung der Kamera 17 werden somit deren Einstellungen, beispielsweise deren Objektiveinstellungen, auf die Entfernung zum Referenzelement 23 und damit auf die Entfernung zur Membran 3 angepasst.

Figur 5 zeigt eine Variante der Fokussierung der Kamera 17. Hier ist, im Gegensatz zum Ausführungsbeispiel in Figur 4, das Referenzelement 23 für die Fokussierung der Kamera 17 außerhalb des Detektionsbereichs 2 angeordnet.

Bei dem Referenzelement 23 kann es sich um einen Teil der Membran 3 handeln, der eine neutrale und nicht von einer Nachweisreaktion betroffene Stelle ermöglicht, da dieser Teil außerhalb des Detektionsbereichs 2 angeordnet ist. Diese Stelle ist somit frei von Verschmutzungen und/oder Luftblasen, sodass sie auf vorteilhafte Weise für die Fokussuche verwendet werden kann. Es kann sich bei dem Referenzelement 23 aber auch um ein anderes Bauteil, beispielsweise um ein kontrastreiches, für die Fokussierung einer Kamera 17 besonders gut geeignetes Element handeln.

Bei der Fokussierung werden die Einstellungen der Kamera 17 mithilfe der Lichtquelle 22 auf die Entfernung zum Referenzelement 23 und damit auf die Entfernung zur Membran 3 eingestellt. Die Lichtquelle 22 erzeugt einen Lichtkanal 24, der durch das Referenzelement 23 und einen lichtdurchlässigen Bereich 25 führt und auf die Kamera 17 gerichtet ist.

Die Erfindung schlägt somit allgemein ein Verfahren in einem Detektionsbereich 2 zur Aufzeichnung von Mikropartikeln 1 vor, wobei die Mikropartikel 1 auf einer Membran 3 gesammelt und durch eine Abfolge 4 von Aufnahmen 5 entlang der Membran 3 aufgezeichnet werden, wobei wenigstens ein Referenzmarker 6 pro Aufnahme 5 aufgezeichnet wird. Ein derartiges erfindungsgemäßes Verfahren bzw. ein erfindungsgemäßer Detektionsbereich 2 sind insbesondere zur Aufzeichnung und Analyse von Mikropartikeln 1 in der Pharmazie und Lebensmittelindustrie von Interesse, jedoch nicht auf diese Industriezweige beschränkt.

### Bezugszeichenliste

- 1: Mikropartikel
- 2: Detektionsbereich
- 3: Membran
- 4: Abfolge von 5
- 5: Aufnahme
- 6: Referenzmarker
- 7: Aufnahmesegment
- 8: fluidisches Kanalsystem
- 9: Kammer
- 10: Aufnahmeraum
- 11: Spannring
- 12: Ablauf von 3
- 13: Zulauf
- 14: Ablauf von 10
- 15: Rand von 3
- 16: Folie
- 17: Kamera
- 18: scheibenförmiger Probenträger
- 19: Mittel
- 20: Flüssigkeitsstrom
- 21: Mikroorganismen
- 22: Lichtquelle
- 23: Referenzelement
- 24: Lichtkanal
- 25: lichtdurchlässiger Bereich
- 26: Aufnahmeeinheit

## Patentansprüche

1. Verfahren zur Aufzeichnung von Mikropartikeln (1) in einem Detektionsbereich (2) mit einer Membran (3), wobei die Mikropartikel (1) auf der Membran (3) gesammelt und durch wenigstens eine Aufnahme (5) der Membran (3), insbesondere durch eine Abfolge (4) von Aufnahmen (5) entlang der Membran (3), aufgezeichnet werden, **dadurch gekennzeichnet, dass** wenigstens ein Referenzmarker (6) pro Aufnahme (5) aufgezeichnet wird.

2. Verfahren nach Anspruch 1, **dadurch gekennzeichnet, dass** wenigstens zwei Referenzmarker (6) pro Aufnahme (5) aufgezeichnet werden, insbesondere wobei sich die beiden Referenzmarker (6) auf gegenüberliegenden Seiten der Aufnahme (5) befinden.

3. Verfahren nach einem die vorangegangenen Ansprüche, **dadurch gekennzeichnet, dass** zwischen zwei Aufnahmen (5) immer wenigstens ein Referenzmarker (6), insbesondere wenigstens zwei Referenzmarker (6), detektierbar ist/sind.

4. Verfahren nach einem der vorangegangenen Ansprüche, **dadurch gekennzeichnet, dass** wenigstens zwei unterschiedliche Abbildungsentfernungen pro Aufnahmesegment (7) auf der Membran (3) aufgezeichnet und zu einer Aufnahme (5) generiert werden.

5. Verfahren nach einem der vorangegangenen Ansprüche, **dadurch gekennzeichnet, dass** die Aufzeichnung wenigstens eine Fluoreszenzaufnahme beinhaltet, insbesondere wobei bei jeder Aufnahme (5) wenigstens eine Fluoreszenzaufnahme aufgezeichnet wird.

6. Verfahren nach einem der vorangegangenen Ansprüche, **dadurch gekennzeichnet, dass** das Verfahren in einem fluidischen Kanalsystem (8) durchgeführt wird.

7. Verfahren zur Aufzeichnung von Mikropartikeln (1) in einem Detektionsbereich (2) mit einer Membran (3), wobei die Mikropartikel (1) auf der Membran (3) gesammelt und durch wenigstens eine Aufnahme (5) entlang der Membran (3) aufgezeichnet werden, insbesondere nach einem der vorangehenden Ansprüche oder nach dem Oberbegriff von Anspruch 1, **dadurch gekennzeichnet, dass** vor der Aufnahme (5) wenigstens ein Verarbeitungsschritt, insbesondere mehr als ein Verarbeitungsschritt, auf der Membran (3) ausgeführt wird.

8. Verfahren nach einem der vorangegangenen Ansprüche, **dadurch gekennzeichnet, dass** der wenigstens eine Verarbeitungsschritt eine Fixierung und/oder Konditionierung und/oder Färbung der Mikropartikel (1) und/oder eine Hintergrundreduktion und/oder eine thermische und/oder optische Anregung umfasst.

9. Verfahren nach einem der vorangegangenen Ansprüche, **dadurch gekennzeichnet, dass** die gesammelten Mikropartikel (1) in einem kleinen Volumen in eine mit dem Detektionsbereich (2) verbundenen Kammer (9) gespült und mit wenigstens einer in der Kammer (9) vorgehaltenen Substanz behandelt werden und dass die Mikropartikel (1) zur Aufnahme (5) in den Detektionsbereich (2) zurückgespült werden.

10. Verfahren nach dem Oberbegriff von Anspruch 1 oder nach einem der vorangehenden Ansprüche, **dadurch gekennzeichnet, dass** zur Fokussierung einer Aufnahmeeinheit (26), insbesondere einer Kamera (17), ein Referenzelement (23) verwendet wird, bevorzugt wobei das Referenzelement (23) außerhalb des Detektionsbereichs (2) angeordnet ist.

11. Detektionsbereich (2) zur Aufzeichnung von Mikropartikeln (1), insbesondere zur Durchführung eines der zuvor beanspruchten Verfahren, aufweisend einen Aufnahmeraum (10) mit einer Membran (3) und wenigstens einen Referenzmarker (6), **dadurch gekennzeichnet, dass** die Membran (3) im Aufnahmeraum (10) vorgespannt ist.

12. Detektionsbereich (2) nach Anspruch 10, **dadurch gekennzeichnet, dass** die Membran (3) durch einen Spannring (11) oder ein Spannmittel vorgespannt ist, wobei der Spannring (11) oder das Spannmittel vorzugsweise in eine Aufnahme eingearbeitet ist und/oder dass der Spannring (11) oder das Spannmittel abdichtend ist.

13. Detektionsbereich (2) nach einem auf einen Detektionsbereich (2) gerichteten Anspruch, **dadurch gekennzeichnet, dass** ein Material des Aufnahmeraums (10) zumindest teilweise die Membran (3) durchdringt.

14. Detektionsbereich (2) nach einem auf einen Detektionsbereich (2) gerichteten Anspruch, **dadurch gekennzeichnet, dass** der Aufnahmeraum (10) und die Membran (3) unterschiedliche optische Eigenschaften aufweisen.

15. Detektionsbereich (2) nach einem auf einen Detektionsbereich (2) gerichteten Anspruch, **dadurch gekennzeichnet, dass** die Membran (3) einen Ablauf (12) hat, insbesondere wobei der Ablauf (12) eine Ablaufrinne umfasst.

16. Detektionsbereich (2) nach einem auf einen Detektionsbereich (2) gerichteten Anspruch, **dadurch gekennzeichnet, dass** der Ablauf (12) der Membran (3) entlüftet ist.

17. Detektionsbereich (2) nach einem auf einen Detektionsbereich (2) gerichteten Anspruch, **dadurch gekennzeichnet, dass** die Membran (3) länglich ausgebildet ist.

18. Detektionsbereich (2) nach einem auf einen Detektionsbereich (2) gerichteten Anspruch, **dadurch gekennzeichnet, dass** der Aufnahmeraum (10) einen Zulauf (13) und einen Ablauf (14) aufweist, wobei die Membran (3) vorzugsweise zwischen Zulauf (13) und Ablauf (14) positioniert ist.

19. Detektionsbereich (2) nach einem auf einen
Detektionsbereich (2) gerichteten Anspruch, **dadurch gekennzeichnet, dass** der wenigstens eine Referenzmarker (6) an der Membran (3), insbesondere durch die Membran (3), ganz besonders durch den Rand (15) der Membran (3), ausgebildet ist.

20. Detektionsbereich (2) nach einem auf einen
Detektionsbereich (2) gerichteten Anspruch, **dadurch gekennzeichnet, dass** der wenigstens eine Referenzmarker (6) oder wenigstens zwei Referenzmarker (6) so an der Membran (3) oder zur Membran (3) hin ausgerichtet sind, dass bei jeder Aufnahme (5) wenigstens zwei Positionen des wenigstens einen Referenzmarkers (6) oder der wenigstens zwei Referenzmarker (6) aufnehmbar sind.

21. Detektionsbereich (2) nach einem auf einen
Detektionsbereich (2) gerichteten Anspruch, **dadurch gekennzeichnet, dass** jeder Referenzmarker (6) oder jedes Aufnahmesegment (7) eine eigene Kennzeichnung hat.

22. Detektionsbereich (2) nach einem auf einen
Detektionsbereich (2) gerichteten Anspruch, **dadurch gekennzeichnet, dass** sich der Detektionsbereich (2) in einem fluidischen Kanalsystem (8), vorzugsweise in einer Mikrofluidik eines scheibenförmiger Probenträgers (18), befindet, insbesondere wobei der Detektionsbereich (2) mit wenigstens einer Kammer (9) verbunden ist.

23. Detektionsbereich (2) nach dem vorherigen Anspruch, **dadurch gekennzeichnet, dass** die Kammer (9), insbesondere eine Kavität der Kammer (9), wenigstens eine Substanz, vorzugsweise eine Nukleinsäuresonde, umfasst.

24. Detektionsbereich (2) nach einem der beiden vorangegangenen Ansprüche, **dadurch gekennzeichnet, dass** das fluidische Kanalsystem (8) eine Folie (16) aufweist, die vorzugsweise gegenüber der Membran (3) positioniert ist und/oder dass die Folie (16) entfernbar ist.

25. Scheibenförmiger Probenträger (18), insbesondere mit einer Mikrofluidik, **dadurch gekennzeichnet, dass** Mittel (19) zur Ausführung eines Verfahrens nach einem der Ansprüche 1 bis 10 ausgebildet sind und/oder dass ein Detektionsbereich (2) nach einem der Ansprüche 11 bis 24 ausgebildet ist.

26. Scheibenförmiger Probenträger (18) nach dem vorangehenden Anspruch, **dadurch gekennzeichnet, dass** ein Referenzelement (23) vorzugsweise außerhalb des Detektionsbereichs (2) angeordnet ist.

27. Verwendung eines vorzugsweise außerhalb eines Detektionsbereichs (2) angeordneten Referenzelements (23) eines vorzugsweise nach einem der Ansprüche 25 oder 26 ausgebildeten scheibenförmigen Probenträgers (18) zu einer Fokussierung für eine Aufnahme (5) einer Membran (3).
